# EUROPÄISCHE PATENTANMELDUNG

(11) **EP 2 151 271 A1**
(43) Veröffentlichungstag der Anmeldung: **10.02.2010**
(21) Anmeldenummer: 09166423.5
(22) Anmeldetag: 27.07.2009
(51) Int. Cl.: B01D 39/20, B01D 46/00, B01D 46/24, F01N 3/022

(54) **Verfahren zur Herstellung eines keramischen Filterelements**

(30) Priorität: 05.08.2008 DE 102008036379
(71) Anmelder: MANN+HUMMEL GmbH, 71638 Ludwigsburg (DE)
(72) Erfinder: Franz, Andreas, 71638, Ludwigsburg (DE)
(74) Vertreter: Voth, Gerhard

(57) **Zusammenfassung**

Es wird ein Verfahren zur Herstellung eines keramischen Filterelements in einem Abgasfilter für Brennkraftmaschinen vorgestellt, bei dem ein brennbares, nicht -keramisches Filtermedium zu einem Wickel geformt und mit einem keramischen Schlicker getränkt wird. Der keramische Schlicker weist eine solche Pulvergrößenverteilung auf, dass das Filterelement im fertigen Zustand eine gewünschte Porositätsverteilung entlang des Wickelquerschnitts aufweist.

## Beschreibung

### Technisches Gebiet

Die Erfindung betrifft allgemein ein Verfahren zur Herstellung eines keramischen Filterelements in einem Abgasfilter einer Brennkraftmaschine. Insbesondere betrifft die Erfindung einen Dieselpartikelfilter. Ganz speziell betrifft sie einen Dieselpartikelfilter mit Gradientenstruktur.

### Stand der Technik

Die WO 2006/005668 offenbart ein Verfahren zur Herstellung eines keramischen Filterelements in einem Abgasfilter für Brennkraftmaschinen. Hierbei wird zunächst eine brennbare, nicht -keramische Trägerbahn mit einem keramischen Schlicker getränkt und anschließend in der gewünschten geometrischen Form soweit ausgebrannt, bis die Trägerbahn verbrannt und ein starrer Filterkörper gebildet ist. Solche porösen keramischen Bauteile können beispielsweise als Katalysatorträger oder für Fi Itrationsanwendungen, vor allem im Hochtemperaturbereich, eingesetzt werden.

Für die Verwendung als Filterelement ist ein wechselseitiger Verschluss der Kanäle erforderlich, wobei das o.g. Verfahren den Vorteil bietet, dass der Verschluss bereits bei der Fertigung der Papierelemente eingebracht werden kann und keinen zusätzlichen, nachgeschalteten Fertigungsschritt erfordert, wie es z.B. bei extrudierten Wabenkörpern der Fall ist.

Es sind eine Vielzahl von keramischen Klebstoffen und Vergussmassen kommerziell erhältlich, z.B. von den Firmen Cotronics Corp. oder Sauere isen. Diese üblicherweise für den Verschluss der Kanäle eingesetzte Masse, die auch als Vergussmasse, keramischer Kleber oder keramisches Plugging bezeichnet wird, liefert nach dem Sintern Filte relemente mit einer einheitlichen Porenverteilung über seinen Querschnitt.

Es besteht folglich ein Bedarf, ein Verfahren zur Herstellung von keramischen Filterelementen bereit zu stellen, das die geschilderten Nachteile des Standes der Technik vermeidet.

### Offenbarung der Erfindung

Es ist daher die Aufgabe der vorliegenden Erfindung, ein Verfahren zur Herstellung eines keramisches Filterelements in einem Abgasfilter einer Brennkraftmaschine bereitzustellen, das es erlaubt, ein Filterelement zu erhalten, das über seinen Querschnitt eine unterschiedliche Porosität zeigt.

Diese und weitere Aufgaben werden durch das Verfahren zur Herstellung eines keramischen Filterelements nach Anspruch 1 und die keramische Vergussmasse (Schlicker) nach Anspruch 13 gelöst.

Vorteilhafte Ausführungsformen der Erfindung sind in den Unteransprüchen dargelegt.

### Kurze Beschreibung der Zeichnungen

Die Erfindung wird im Folgenden anhand der zeichnungen näher beschrieben. Dabei zeigt

Fig. 1 einen mit einem erfindungsgemäßen Keramikschlicker getränkten Wickel;

Fig. 2 den Wickel aus Fig. 1 in abgewickeltem Zustand; und

Fig. 3 einen Ausschnitt aus dem Querschnitt durch den Wickel aus Fig. 2 Ausführungsform(en) der Erfindung

Wie bereits erwähnt, wird in einem Verfahren zur Herstellung eines keramischen Filterelements in einem Abgasfilter für Brennkraftmaschinen nach dem Stand der Technik zunächst eine brennbare, nicht -keramische Trägerbahn zu einem Wickel geformt und mit einem keramischen Schlicker getränkt. Anschließend wird der getränkte Wickel getrocknet und dann gesintert. Das nichtkeramische Material kann dabei aus organischem Material, bspw. Cellulose, oder einem synthetischen Material bestehen.

Unter den üblichen Bedingungen entsteht dabei ein Filterelement mit einem einheitlichen Flächengewicht über seinen gesamten Querschnitt und damit, da das Flächengewicht direkt proportional zur Porosität ist, auch mit einer einheitlichen Porenverteilung. Je mehr Material (Schlicker) vorhanden ist, desto höher ist das Flächengewicht und desto dichter ist nach dem Sintern die Struktur. Damit sinkt die Porosität.

Verwendet man nun zum Tränkern des Wickels einen Keramikschlicker mit einer vorbestimmten Pulverg röße bzw. Pulvergrößeverteilung, so lässt sich ein keramisches Filterelement herstellen, das über seinen Querschnitt ein unterschiedliches Flächengewicht und damit unterschiedliche Porositäten aufweist. Damit ist eine gezielte Strömungsführung und eine bevorzugte Rußanlagerung darstellbar. Die Strömung nimmt immer den Weg des geringsten Widerstandes, mit der Strömung fliegt der Ruß. So kann der Ruß gezielt angelagert werden. Es kann ein von der vorhandenen Technik abweichender Druckverlustverlauf über die Beladung dargestellt werden. Es hat sich gezeigt, dass beim Trocknen des getränkten Wickels durch entsprechend gewählte Parameter eine mehr oder weniger starke Wanderung der Keramikpartikel (Aluminiumtitanat) über den Querschnitt des Bauteils einsetzt. Durch gezielte Wahl der Parameter ist das Filterelement daher so herstellbar, dass entweder innen oder außen ein anderes Flächengewicht mit der eingesetzten Kerami ksuspension einstellbar ist. Nach dem Sintern der Keramik ist dies immer noch feststellbar.

Bei der vorliegenden Erfindung wird der Wickel mit einem Keramikschlicker getränkt, der eine vorbestimmte Pulvergröße bzw. Pulvergrößenverteilung au fweist. Ein solcher Schlicker wird dadurch hergestellt, dass Einzelpulver, Wasser und Bindemittel vermahlen werden und die Mischung anschließend gerührt wird. Beim anschließenden Trocknen des getränkten Wickels ist das Trocknungsverfahren für die späteren Eigenschaften mitbestimmend. So können die Wickel bspw. in einer Mikrowelle oder in einem Klimaschrank getrocknet werden. Beim Trocknen im Klimaschrank sind Temperatur, Luftfeuchtigkeit und Verweildauer wichtige Parameter. Beim Trocknen in der Mikrowelle spielen deren Leistung und die Verweildauer eine entscheidende Rolle.

Das Sinterprogramm wird bestimmt durch die Temperaturkurve über die Zeit und der Atmosphäre im Sinterofen.

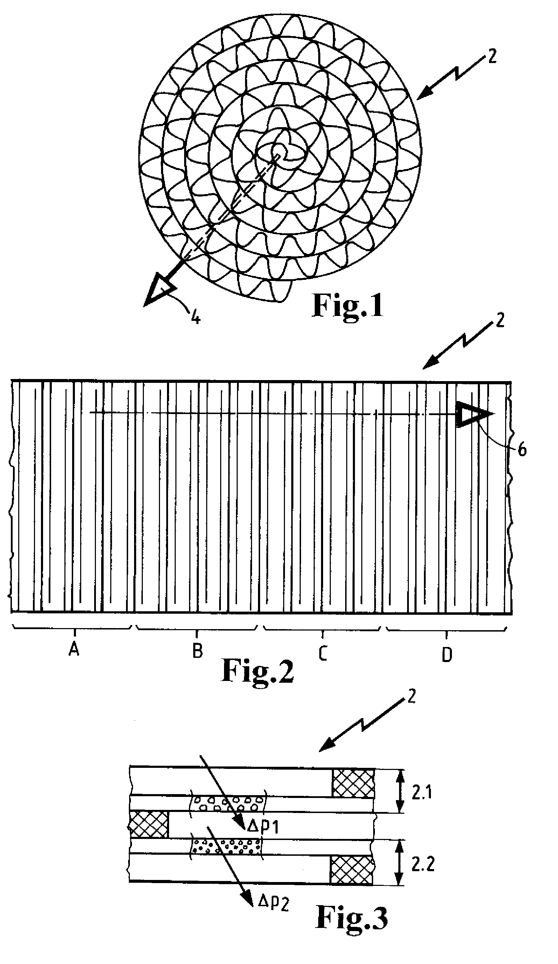

Fig. 1 zeigt einen mit einem erfindungsgemäßen Keramikschlicker getränkten Wickel 2. In Richtung des Pfeiles 4 ergibt sich von innen nach außen eine abnehmende Porosität un d damit ein zunehmender Druckverlust Δ p. In Fig. 2 ist der Wickel aus Fig. 1 in abgewickeltem Zustand gezeigt. Es ergeben sich verschiedene Zonen, im gezeigten Fall A - D, mit einem steigenden Flächengewicht von innen nach außen in Richtung des Pfeiles 6. F ig. 3 schließlich zeigt einen Ausschnitt aus dem Querschnitt durch den Wickel 2 aus Fig. 1, wobei der Querschnitt durch 2 Kanäle mit unterschiedlicher Porosität in den Kanalwänden sichtbar ist.

Es ist für den Fachmann klar, dass die Erfindung auch dazu verwendet werden kann, eine umgekehrte Verteilung des Flächengewichts und damit der Porosität zu erzielen, z.B. durch Partikelwanderung von außen nach innen.

## Patentansprüche

1. Verfahren zur Herstellung eines keramischen Filterelements in einem Abgasfilter für Brennkraftmaschinen, bei dem ein brennbares, nicht -keramisches Filtermedium zu einem Wickel (2) geformt und mit einem keramischen Schlicker getränkt wird, **dadurch gekennzeichnet, dass** der keramische Schlicker eine solche Pulvergrößenverteilung aufweist, dass das Filterelement im fertigen Zustand eine gewünschte Porositätsverteilung entlang des Wickelquerschnitts aufweist.

2. Verfahren nach Anspruch 1, **dadurch gekennzeichnet, dass** das Filterelement im fertigen Zustand eine abnehmende Porositätsverteilung entlang des Wickelquerschnitts aufweist.

3. Verfahren nach Anspruch 1, **dadurch gekennzeichnet, dass** das Filterelement im fertigen Zustand eine zunehmende Porositätsverteilung entlang des Wickelquerschnitts aufweist.

4. Verfahren nach einem der Ansprüch 1 bis 3, **dadurch gekennzeichnet, dass** das brennbare, nicht-keramische Filtermedium aus organischem Material, beispielsweise Cellulose, besteht.

5. Verfahren nach einem der Ansprüche 1 bis 3, **dadurch gekennzeichnet, dass** das Filtermedium aus synthetischem Material besteht.

6. Verfahren nach einem der vorstehenden Ansprüche, **gekennzeichnet durch** den zusätzlichen Schritt des Trocknens des Wickels (2).

7. Verfahren nach Anspruch 6, **gekennzeichnet durch** den zusätzlichen Schritt des Sinterns des getrockneten Wickels (2).

8. Verfahren nach Anspruch 6, **dadurch gekennzeichnet, dass** der Wickel (2) in einer Mikrowellenvorrichtung getrocknet wird.

9. Verfahren nach Anspruch 6, **dadurch gekennzeichnet, dass** der Wickel (2) in einem Klimaschrank getrocknet wird.

10. Verfahren nach Anspruch 8, **dadurch gekennzeichnet, dass** die Parameter Leistung und Verweildauer aufeinander abgestimmt werden.

11. Verfahren nach Anspruch 9, **dadurch gekennzeichnet, dass** die Parameter Temperatur, Luftfeuchtigkeit und Verweildauer aufeinader abgestimmt werden.

12. Verfahren nach Anspruch 7, **dadurch gekennzeichnet, dass** das Sinterprogramm durch die Temperaturkurve über die Zeit und der Atmosphäre im Sinterofen bestimmt wird.

13. Keramischer Schlicker zur Verwendung in einem Verfahren zur Herstellung eines keramischen Filterelements in einem Abgasfilter für Brennkraftmaschinen nach einem der Ansprüche 1 bis 12, **dadurch gekennzeichnet, dass** er eine solche Pulvergrößenverteilung aufweist, dass das Filterelement im fertigen Zustand eine gewünschte Porositätsverteilung entlang des Wickelquerschnitts aufweist.
